# FASCICULE DE BREVET EUROPEEN

(11) **EP 3 535 505 B1**
(45) Date de publication et mention de la délivrance du brevet: **23.06.2021**
(21) Numéro de dépôt: 17804229.7
(22) Date de dépôt: 31.10.2017
(51) Int. Cl.: F16H 57/08

(54) **PORTE-SATELLITES POUR UN REDUCTEUR DE VITESSE A TRAIN EPICYCLOÏDAL**
PLANETENTRÄGER FÜR EINE DREHZAHLMINDERUNGSEINHEIT MIT EINEM PLANETENRADGETRIEBE
PLANET CARRIER FOR A SPEED-REDUCING UNIT WITH AN EPICYCLIC GEAR TRAIN

(30) Priorité: 07.11.2016 FR 1660738
(43) Date de publication de la demande: 11.09.2019
(73) Titulaire: Safran Transmission Systems, 92700 Colombes (FR)
(72) Inventeur: LEFEBVRE, Maxime, 77550 Moissy-Crayamel (FR); DI GIOVANNI, Jean-Charles, Michel, Pierre, 77550 Moissy-Crayamel (FR); PELTIER, Jordane, Emile, André, 77550 Moissy-Crayamel (FR); PTASZYNSKI, Patrice, Julien, 77550 Moissy-Crayamel (FR)
(74) Mandataire: Gevers & Orès
(86) Numéro de dépôt international: PCT/FR2017/052989
(87) Numéro de publication internationale: WO 2018/083410

(56) Documents cités:
- EP-A1- 1 186 804
- EP-A1- 2 677 209
- EP-A2- 1 482 210

## Description

### DOMAINE TECHNIQUE

La présente invention concerne un porte-satellites pour réducteur à train épicycloïdal, en particulier pour une turbomachine d'aéronef.

### ÉTAT DE LA TECHNIQUE

Le document EP2677209 A1 divulgue un porte-satellites pour un réducteur de vitesse selon le texte de la partie pré-caractérisante de la revendication 1. Un réducteur mécanique a pour but de modifier le rapport de vitesse et/ou le couple entre l'axe d'entrée et l'axe de sortie d'un mécanisme.

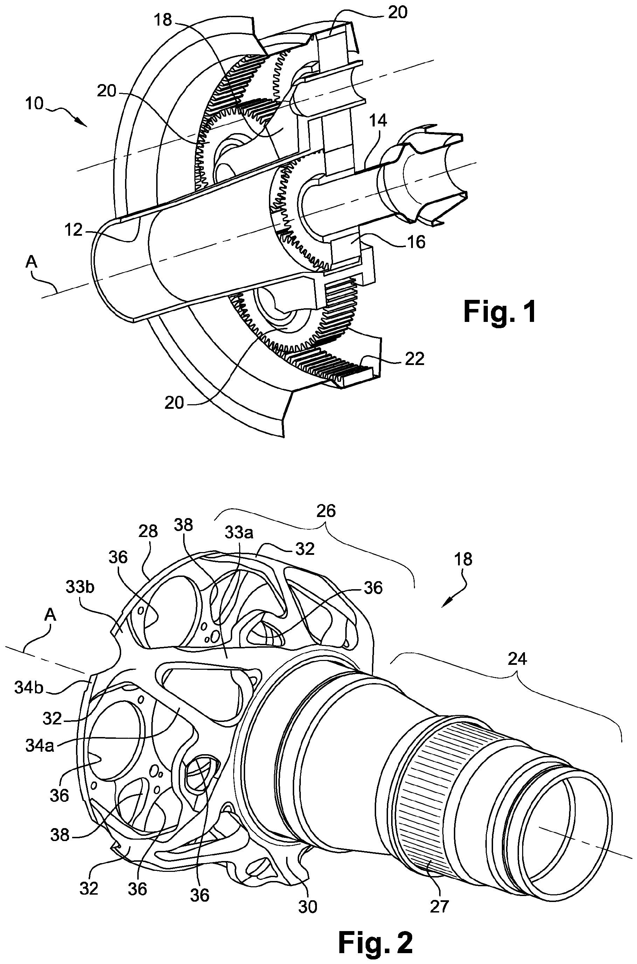

De manière classique, les turbomachines à double flux, notamment celles ayant un haut taux de dilution, comportent un réducteur mécanique à train épicycloïdal 10 (voir figure 1) pour entraîner l'arbre 12 d'une soufflante (non représentée). De manière usuelle, le réducteur à train épicycloïdal 10 a pour but de transformer la vitesse de rotation dite rapide de l'arbre d'une turbine de puissance 14 en une vitesse de rotation plus lente pour l'arbre 12 entraînant la soufflante.

De manière classique, un réducteur à train épicycloïdal 10 comporte (par rapport à l'axe longitudinal A de la turbomachine autour duquel tourne notamment l'arbre de la turbine de puissance 14) :
- un pignon solaire 16, sous la forme d'une roue dentée qui est montée par une liaison cannelée sur l'arbre de turbine 14, ce pignon solaire 16 tournant dans un sens de rotation en entraînant le réducteur 10,
- un porte-satellites 18 portant des satellites 20 par l'intermédiaire de paliers, de manière à tourner autour d'axes Y parallèles à l'axe longitudinal A, les satellites 20 étant formés par des roues dentées s'engrenant autour du pignon solaire 16, et le porte-satellites 18 pouvant être fixé à un stator,
- une couronne externe dentée 22, qui s'engrène avec les satellites 20 et qui peut être maintenue fixe par rapport à la structure de la turbomachine (un stator).

En particulier, le porte-satellites 18 est une des pièces centrales du réducteur 10, supportant les axes paliers ainsi que les satellites 20. Il a notamment pour fonction d'assurer de bonnes conditions de support pour les satellites 20 du réducteur épicycloïdal 10. Une des exigences majeures lié à un porte-satellites 18 est de maintenir les satellites 20 alignés, malgré les déformations subies par la le porte-satellite 18 qui est fortement sollicité, et également de ne pas rompre en cas de charge ultime. Un désalignement des satellites 20 peut notamment provoquer une usure prématurée des engrenages et du réducteur de vitesse 10.

Le porte-satellites 18 est classiquement une pièce en acier massive et donc lourde.

Ainsi, l'objectif de la présente demande est de proposer un porte-satellites 18 capable de supporter les charges appliquées tout en maintenant les satellites 20 alignés, le plus léger possible.

### EXPOSÉ DE L'INVENTION

Un porte-satellites selon la présente invention est défini dans la revendication indépendante 1. Modes de réalisation préférés sont indiqués dans les revendications dépendantes.

La structure du porte-satellites peut permettre un gain de masse de 20 % par rapport aux porte-satellites de l'état de la technique. Cette structure peut aussi permettre de réaliser un gain sur le désalignement radial des satellites de - 45% par rapport aux porte-satellites classiques de l'état de la technique.

La structure du porte-satellites peut également permettre une meilleure accessibilité pour l'usinage et pour la maintenance. Comme l'architecture de la cage est plus ouverte par rapport aux porte-satellites de l'état de la technique dont, ceci permet entre autres des contrôles endoscopiques plus simples. Les contraintes maximales et le désalignement tangentiel restent équivalents à ceux des porte-satellites classiques connus de l'état de la technique.

Le porte-satellites selon l'invention peut comprendre une ou plusieurs des caractéristiques suivantes, prises isolément les unes des autres ou en combinaison les unes avec les autres :
- chaque pontet comprend au moins deux barres entrecroisées,
- les deux barres de chaque pontet s'entrecroisent dans une zone située à proximité de l'un des flancs,
- ladite zone est située à proximité du flanc situé du côté oppose audit organe de transmission,
- chaque pontet a une forme générale de X,
- au moins l'un des flancs comprend, entre deux sièges adjacents, au moins un évidement,
- chaque évidement est aligné avec un pontet selon un plan passant par l'axe A,
- chaque évidement a une forme générale en U ou V dont l'ouverture est orientée radialement vers l'extérieur par rapport à l'axe A,
- les flancs et les pontets sont formés d'une seule pièce.

L'invention concerne également un réducteur de vitesse à train épicycloïdal comportant un porte-satellites comme évoqué ci-dessus. L'invention concerne encore une turbomachine, en particulier d'aéronef, comportant un réducteur à train épicycloïdal comme évoqué ci-dessus.

### BRÈVE DESCRIPTION DES FIGURES

D'autres caractéristiques et avantages de l'invention apparaîtront à la lecture de la description détaillée d'exemples de réalisation ci-après, en référence aux figures annexées qui représentent, respectivement :
- la figure 1 est une vue en perspective d'un réducteur à train épicycloïdal classique,
- la figure 2 est une vue en perspective d'un porte-satellites selon l'invention,
- les figures 3 et 4 sont une vue de dessus d'une cage de porte-satellites selon l'invention,
- la figure 5 est une vue de face d'un réducteur à train épicycloïdal selon l'invention,
- la figure 6 est une vue de derrière d'un réducteur à train épicycloïdal selon l'invention.

### DESCRIPTION DETAILLÉE D'UN MODE DE RÉALISATION

Comme mentionné ci-dessus, la figure 1 illustre la structure générale d'un réducteur de vitesse à train épicycloïdal 10. Lors du fonctionnement du train épicycloïdal 10, le couple transmis au travers du réducteur 10 étant important, ceci peut provoquer une déformation du portes-satellites 18 et mener à un désalignement des axes des satellites 20. Par ailleurs, les forces centrifuges peuvent également générer une déformation du porte-satellites 20, pouvant là encore causer un désalignement des satellites 20. Comme indiqué précédemment, il est indispensable que le porte-satellites 18 maintienne le bon positionnement des satellites 20, malgré les déformations subies par le porte-satellites 18 en fonctionnement.

Comme visible sur la figure 2, le porte-satellites 18 selon l'invention s'étend le long de l'axe A et comporte deux parties : un organe de transmission de couple d'axe 24 longitudinal A et une cage annulaire 26 s'étendant autour de l'axe A. La cage annulaire 26 est reliée à une extrémité longitudinale de l'organe de couple 24. L'organe de transmission de couple 24 est tubulaire et s'étend axialement (selon l'axe A). Il a une forme générale cylindrique ou tronconique, dont une extrémité longitudinale est prolongée par une partie de liaison annulaire et destinée à faire le lien avec l'arbre de turbine 14 (voir figure 1). Ainsi, l'extrémité longitudinale avant de l'organe 24 est reliée à la cage 26 de l'extrémité arrière qui comporte une denture 27 destinée à être engrainée avec l'arbre de turbine 14.

L'avant est défini comme étant du côté de la soufflante et l'arrière est défini comme étant du côté de la tuyère d'échappement de la turbomachine.

La cage annulaire 26 comporte deux flancs 28, 30 s'étendant sensiblement radialement par rapport à l'axe A, respectivement un flanc avant 28 et un flanc arrière 30. Le flanc avant 28 est défini comme le flanc situé du côté opposé de l'organe de transmission 24 et le flanc arrière 30 est défini comme celui solidaire de l'organe 24. Les deux flancs 28, 30 sont reliés entre eux par des pontets 32. Comme illustré sur les figures 2, 3 et 4, chaque pontet 32 comprend au moins deux barres entrecroisées 33, 34 et présente donc une forme générale de X. Chaque barre 33, 34 est ainsi découpée en deux parties correspondantes 33a, 33b, 34a, 34b sensiblement alignées et s'étendant de part et d'autre du croisement (ou zone de croisement) du X. Dans l'exemple représenté, les deux barres correspondantes 33, 34 de chaque pontet 32 s'entrecroisent dans une zone située à proximité de l'un des flancs 28, 30, le flanc avant 28 en l'occurrence.

Selon le mode de réalisation présenté, les flancs 28, 30 et les pontets 32 sont formés d'une seule pièce. Ceci permet que le porte-satellites 18 forme un seul ensemble structurel, éliminant de fait les problèmes liés à l'assemblage de plusieurs pièces par l'intermédiaire d'organes de liaison additionnels. Ceci permet notamment d'éviter les problèmes liés au balourd généré par les tolérances d'assemblage, les problèmes de montage ou encore la masse supplémentaire due à la multiplication des pièces.

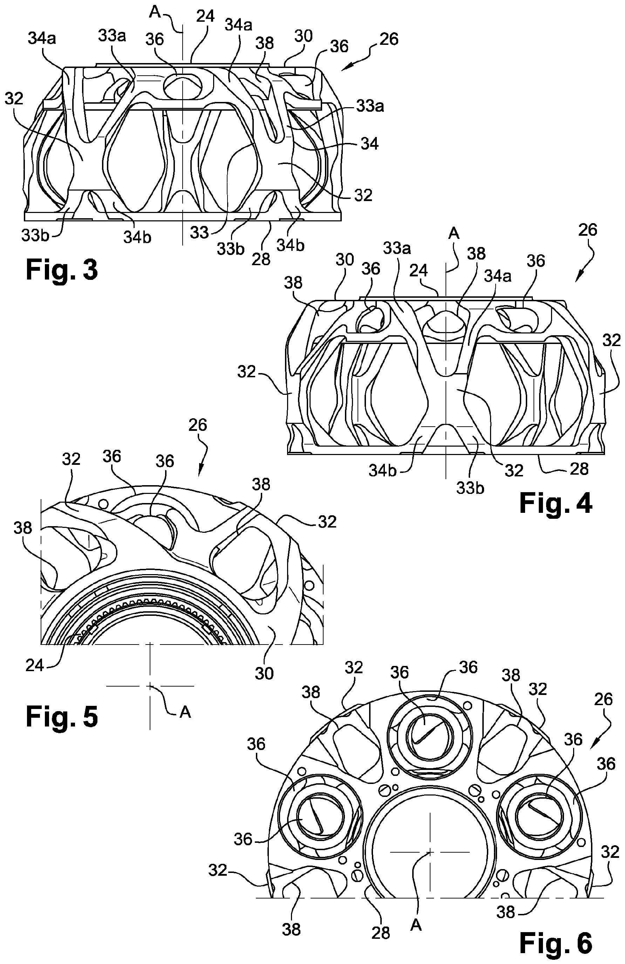

Comme illustré sur les figures 2 et 6, les flancs avant 28 et arrière 30 comportent chacun des trous 36 servant chacun au montage d'une extrémité d'un arbre de satellite 20 et formant ainsi siège 36 pour un satellite 20. Ces sièges 36 s'étendent ainsi axialement (selon l'axe A) entre les flancs 28, 30 et sont destinés à supporter les satellites 20 montés de façon rotative autour des sièges 36.

Comme visible sur les figures 2 et 6, au moins l'un des flancs 28, 30, en l'occurrence le flanc avant 28 comprend, entre deux sièges 36 adjacents, au moins un évidement 38 aligné avec un pontet 32 selon un plan passant par l'axe A (voir figure 6). Chaque évidement 38 est situé entre les barres correspondantes 33, 34 de chaque pontet 32 et présente une forme générale en U ou V dont l'ouverture est orientée radialement vers l'extérieur par rapport à l'axe A.

De manière connue en soi, lors du fonctionnement du train réducteur 10, un premier chemin d'efforts traverse le flanc arrière 30 (partant des extrémités correspondantes des sièges 36 des satellites 20) puis l'organe de transmission de couple 24. Un second chemin d'efforts traverse le flanc avant 30 (des extrémités correspondantes des sièges 36 des satellites 24 jusqu'aux zones de liaison entre le flanc avant 28 et les pontets 32), les pontets 32 puis l'organe de transmission de couple 24.

La cage 26 qui supporte les axes paliers (selon l'axe Y) et donc les satellites 20 a ainsi été conformée avec les barres 33, 34 entrecroisées pour obtenir des « treillis » ou « croisillons ». Ceci permet le bon passage des efforts nécessaires au fonctionnement du train réducteur 10 avec un minimum de matière. La présente invention présente donc une solution qui optimise la masse du train de réduction 10 sans gêner le passage des efforts entre les flancs 28, 30 et en limitant le désalignement des satellites 20.

Cette optimisation est obtenue grâce à l'inclinaison particulière des barres 33, 34 des pontets 32. En effet, les barres 33, 34 des pontets 32 sont chacune découpées en deux parties : une partie arrière (proche du flanc arrière 30) et une partie avant (proche du flanc avant 28). Les parties arrière 33a, 34a et avant 33b, 34b de chaque barre 33, 34 se rejoignent au croisement du X formé par chaque pontet 32. La particularité de l'invention est que, de même que les barres correspondantes 33, 34 entre elles, les parties arrière 33a, 34a et avant 33b, 34b de chaque barre 33, 34 de chaque pontet 32 ne s'étendent pas dans le même plan et forment un angle différent de 0 entre elles. Ainsi, chaque pontet 32 comprend des barres 33, 34 qui sont chacune inclinées par rapport à un premier plan longitudinal passant par l'axe A et sensiblement par la barre 33, 34 correspondante et donc chaque partie 33a, 34a est inclinée par rapport à un second plan longitudinal passant par A et sensiblement par la partie de barre correspondante 33b, 34b. Cette différence d'inclinaison des barres 33, 34 entre elles et des différentes parties 33a, 34a, 33b, 34b entre elles permet de rigidifier le porte-satellites 26 en torsion atour de l'axe A lors du fonctionnement de la turbomachine.

Par ailleurs, cette structure du train 10 permet de réaliser les opérations de fraisage principales depuis l'extérieur du train 10, ce qui n'est pas possible sur les trains 10 de l'état de l'art.

## Revendications

1. Porte-satellites (18) pour un réducteur de vitesse à train épicycloïdal (10), comportant un organe de transmission de couple (24) d'axe longitudinal (A) et une cage annulaire (26) s'étendant autour de l'axe (A) et reliée à une extrémité longitudinale de l'organe (24), ladite cage (26) comprenant deux flancs (28, 30) s'étendant radialement par rapport à l'axe (A) et reliés par des pontets (32) présentant une forme générale de X, des sièges (36) s'étendant axialement entre les flancs (28, 30) et étant destinés à supporter des satellites (20) montés de façon rotative autour des sièges (36), chaque pontet (32) comprend au moins deux barres (33, 34) correspondantes chacune étant inclinée par rapport à un plan longitudinal passant à la fois par l'axe (A) et par la barre (33, 34) correspondante, les barres (33a, 34b) comprenant chacune une partie avant (33b, 34b) et une partie arrière (33a, 34a) se rejoignant au croisement du X formé par chaque pontet (X), **caractérisé en ce que** les parties avant (33b, 34b) et arrière (33a, 34a) de chaque barre de chaque pontet (32) s'étendent dans un plan distinct et forment un angle différent de zéro entre elles.

2. Porte-satellites (18) selon la revendication précédente, dans lequel les deux barres (33, 34) de chaque pontet (32) s'entrecroisent dans une zone située à proximité de l'un des flancs (38, 30).

3. Porte-satellites (18) selon la revendication précédente, dans lequel ladite zone est située à proximité du flanc (28) situé du côté opposé audit organe de transmission (24).

4. Porte-satellites (18) selon l'une des revendications précédentes, dans lequel au moins l'un des flancs (28, 30) comprend, entre deux sièges (36) adjacents, au moins un évidement (38).

5. Porte-satellites (18) selon la revendication précédente, dans lequel chaque évidement (38) est aligné avec un pontet (32) selon un plan passant par l'axe (A).

6. Porte-satellites (18) selon la revendication 4 ou 5, dans lequel chaque évidement (38) a une forme générale en U ou V dont l'ouverture est orientée radialement vers l'extérieur par rapport à l'axe (A).

7. Porte-satellites (18) selon l'une des revendications précédentes, dans lequel les flancs (28, 30) et les pontets (32) sont formés d'une seule pièce.

8. Réducteur de vitesse à train épicycloïdal (10) comportant un porte-satellites (18) selon l'une quelconque des revendications précédentes.

9. Turbomachine, en particulier d'aéronef, comportant un réducteur à train épicycloïdal (10) selon la revendication précédente.

## Patentansprüche

1. Planetenträger (18) für eine Drehzahlminderungseinheit mit einem Planetenradgetriebe (10), ein Drehmomentübertragungsorgan (24) einer Längsachse (A) und einen ringförmigen Käfig (26) umfassend, der sich um die Achse (A) herum erstreckt und mit einem Längsende des Organs (24) verbunden ist, wobei der Käfig (26) zwei Flanken (28, 30) umfasst, die sich radial in Bezug auf die Achse (A) erstrecken und durch Bügel (32), die eine allgemeine X-Form aufweisen, verbunden sind, wobei sich Sitze (36) axial zwischen den Flanken (28, 30) erstrecken und dazu bestimmt sind, die in drehender Form um die Sitze (36) herum montierten Planeten (20) zu stützen, wobei jeder Bügel (32) mindestens zwei entsprechende Stangen (33, 34) umfasst, von denen jede in Bezug auf eine Längsebene, die sowohl durch die Achse (A) als auch durch die entsprechende Stange (33, 34) verläuft, geneigt ist, wobei die Stangen (33a, 34b) jeweils einen Vorderteil (33b, 34b) und einen Hinterteil (33a, 34a) umfassen, die einander an der Kreuzung des X, das durch jeden Bügel (X) gebildet wird, treffen, **dadurch gekennzeichnet, dass** sich die Vorder- (33b, 34b) und Hinterteile (33a, 34a) jeder Stange jedes Bügels (32) über eine unterschiedliche Ebene erstrecken und zwischen sich einen Winkel ungleich Null bilden.

2. Planetenträger (18) nach dem vorstehenden Anspruch, wobei die beiden Stangen (33, 34) jedes Bügels (32) einander in einer Zone kreuzen, die sich in der Nähe einer der Flanken (38, 30) befindet.

3. Planetenträger (18) nach dem vorstehenden Anspruch, wobei sich die Zone in der Nähe der Flanke (28) befindet, die sich auf der gegenüberliegenden Seite des Übertragungsorgans (24) befindet.

4. Planetenträger (18) nach einem der vorstehenden Ansprüche, wobei mindestens eine der Flanken (28, 30) zwischen zwei benachbarten Sitzen (36) mindestens eine Aussparung (38) umfasst.

5. Planetenträger (18) nach dem vorstehenden Anspruch, wobei jede Aussparung (38) mit einem Bügel (32) entlang einer Ebene ausgerichtet ist, die durch die Achse (A) hindurch verläuft.

6. Planetenträger (18) nach Anspruch 4 oder 5, wobei jede Aussparung (38) eine allgemeine U- oder V-Form aufweist, deren Öffnung in Bezug auf die Achse (A) radial nach außen ausgerichtet ist.

7. Planetenträger (18) nach einem der vorstehenden Ansprüche, wobei die Flanken (28, 30) und die Bügel (32) aus einem einzigen Stück gebildet sind.

8. Drehzahlminderungseinheit mit einem Planetenradgetriebe (10), einen Planetenträger (18) nach einem der vorstehenden Ansprüche umfassend.

9. Turbomaschine, insbesondere eines Luftfahrzeugs, die eine Drehzahlminderungseinheit mit einem Planetenradgetriebe (10) nach dem vorstehenden Anspruch umfasst.

## Claims

1. Planet carrier (18) for a speed reduction gear with epicyclic gearing (10), comprising a torque transmission member (24) of a longitudinal axis (A) and an annular cage (26) extending about the axis (A) and connected to a longitudinal end of the member (24), said cage (26) comprising two sides (28, 30) extending radially with respect to the axis (A) and connected by bridges (32) having a general X shape, seats (36) extending axially between the sides (28, 30) and being intended to support planetary gears (20) mounted to be rotational around the seats (36), each bridge (32) comprises at least two corresponding bars (33, 34), each of which being inclined with respect to a longitudinal plane passing both through the axis (A) and via the corresponding bar (33, 34), each bars (33a, 33b) comprising a front part (33b, 34b) and a rear part (33a, 34a) joining each other at the intersection of the X formed by each bridge (32), **characterized in that** the front parts (33b, 34b) and rear parts (33a, 34a) of each bar of each bridge (32) do not extend in the same plane and form an angle different than 0 with one another.

2. Planet carrier (18) according to the preceding claim, wherein the two bars (33, 34) of each bridge (32) intersect in the zone located in the vicinity of one of the sides (38, 30).

3. Planet carrier (18) according to the preceding claim, wherein said zone is located in the proximity of the side (28) located on the opposite side of said transmission member (24).

4. Planet carrier (18) according to one of the preceding claims, wherein at least one of the sides (28, 30) comprises, between two adjacent seats (36) at least one cavity (38).

5. Planet carrier (18) according to the preceding claim, wherein each cavity (38) is aligned with a bridge (32) along a plane passing through the axis (A).

6. Planet carrier (18) according to claim 4 or 5, wherein each cavity (38) has a general U or V shape of which the opening is oriented radially outwards with respect to the axis (A).

7. Planet carrier (18) according to one of the preceding claims, wherein the sides (28, 30) and the bridges (32) are formed of one single piece.

8. Speed reduction gear with epicyclic gearing (10) comprising a planet carrier (18) according to any one of the preceding claims.

9. Turbine engine, in particular of an aircraft, comprising a reduction gear with epicyclic gearing (10) according to the preceding claim.
